# FASCICULE DE BREVET EUROPEEN

(11) **EP 0 522 947 B1**
(45) Date de publication et mention de la délivrance du brevet: **07.06.2000**
(21) Numéro de dépôt: 92401934.2
(22) Date de dépôt: 06.07.1992
(51) Int. Cl.: C05B 1/04, C05B 1/10, B01F 5/20

(54) **Procédé et installation de production de triple superphosphate (TSP) granulé**
Verfahren und Vorrichtung zur Herstellung von granuliertem Tripelsuperphosphat
Process and device for the production of triple superphosphate granulate

(30) Priorité: 11.07.1991 FR 9108732
(43) Date de publication de la demande: 13.01.1993
(73) Titulaire: MAROC-CHIMIE, Casablanca (MA)
(72) Inventeur: Kendili, El Hadi, Safi III, Safi (MA)
(74) Mandataire: Orès, Bernard

(56) Documents cités:
- US-A- 2 528 514
- US-A- 2 913 330

## Description

La présente invention est relative à un procédé et à une installation de production de triple superphosphate (TSP) granulé.

Pour mieux comprendre l'apport de la présente invention à l'état de la technique en question, il y a lieu de remarquer le fait que l'évolution de la réaction d'attaque d'une solution d'acide phosphorique sur du phosphate dépend, entre autres, de la bonne répartition des grains de phosphate dans la solution acide. Cette réaction a pour rôle de transformer le phosphore contenu dans la roche sous une forme non assimilable par les plantes en une autre forme assimilable par celles-ci.

Or, l'introduction directe du phosphate dans une cuve d'attaque, c'est-à-dire dans un réacteur à cuve de réaction agitée, entraînerait :
- d'une part, une réduction du taux de conversion du phosphate, parce qu'une partie de phosphate quitterait le réacteur sans être attaquée, et
- d'autre part, des pertes par envolement du phosphate dans les gaz d'assainissement.

D'où l'utilisation d'un prémélangeur pour mélanger, préalablement à l'entrée dans la cuve de réaction, le phosphate granulé et la solution d'acide phosphorique. Toutefois, s'il est vrai qu'un prémélangeur classique permet le mouillage du phosphate, son utilisation pose à son tour des problèmes tels que le bouchage ou le colmatage du prémélangeur et les émanations de vapeur et de gaz au niveau de celui-ci, ce qui perturbe l'exploitation et nécessite le recours fréquent à son débouchage.

La présente invention a pour but d'éliminer ces inconvénients des procédés et des installations utilisés dans la technique antérieure et vise à pourvoir à un procédé et à une installation de production de TSP granulé sensiblement améliorés, qui répondent mieux aux nécessités de la pratique que les procédés et installations antérieurement connus, notamment en ce que :
1) ils présentent un rendement de granulation meilleur et assurent une bonne qualité physique du produit fini, avec un taux de recyclage voisin de 3;
2) il n'y a qu'une faible production de poussières et ils se prêtent à un bon assainissement, le respect des normes anti-pollution étant garanti dans chaque cas;
3) la mise en oeuvre du procédé ne requiert qu'une faible consommation d'énergie et l'emploi d'équipements simples, fiables et peu encombrants;
4) le procédé garantit une augmentation de la capacité des unités déjà en service entre 30 et 100%;
5) ce procédé permet surtout d'éviter, par l'utilisation d'équipements adaptés, les problèmes habituellement rencontrés dans les circuits de bouillie, à savoir le bouchage ou colmatage par prise en masse, ainsi que la présence de poches de gaz et le pompage;
6) la solution adoptée permet des démarrages et des arrêts rapides conjointement avec une conduite aisée de la production;
7) le procédé peut s'adapter à des installations déjà en service;
8) la solution adoptée est remarquable aussi parce qu'elle empêche le retour des gaz de réaction.

La présente invention a pour objet un procédé de production de triple superphosphate (TSP) granulé, comportant les étapes suivantes :
i) préparation d'une bouillie de phosphate préalablement broyé et de solution d'acide phosphorique ;
ii) granulation de la bouillie;
iii) séchage du produit granulé;
iv) séparation granulométrique du produit granulé;
v) assainissement et lavage des gaz, et
vi) recyclage des refus de produit fini séparé granulométriquement,
   caractérisé en ce que l'étape i) comporte une opération de décolmatage d'un prémélangeur du phosphate et de l'acide, situé en amont d' un réacteur à cuve d'attaque de la solution acide sur le phosphate granulé, laquelle opération de décolmatage est réalisée par introduction guidée, suivant un chemin axial déformable, de phosphate dosé, préalablement broyé, à l'intérieur du prémélangeur et par pulvérisation de la solution d'acide phosphorique sur le phosphate à la fin du chemin axial d'introduction guidée.

De cette manière il est possible d'effectuer la granulation avec un rendement optimal entraînant un taux de recyclage voisin de 3, cette valeur étant nettement meilleure que celle de l'Art antérieur comprise entre 5 et 5,5.

Conformément à l'invention, l'angle que la direction de pulvérisation fait avec le chemin axial d'introduction guidée de phosphate est supérieur à 60° et peut atteindre environ 75°.

La présente invention a également pour objet une installation de production de triple superphosphate (TSP) granulé comportant les dispositifs suivants :
- un dosimètre de phosphate préalablement broyé;
- un prémélangeur du phosphate broyé ainsi dosé avec une solution d'acide phosphorique, le prémélangeur comprenant une partie supérieure cylindrique raccordée à une partie inférieure tronconique;
- un réacteur à cuve agitée recevant le phosphate et la solution d'acide phosphorique ainsi prémélangés et destiné à permettre l'attaque du phosphate par l'acide phosphorique;
- un tambour granulateur de la bouillie sortant du réacteur;
- un dispositif de séchage du produit ainsi granulé;
- une pluralité de séparateurs granulométriques de ce produit granulé;
- des dispositifs de lavage des gaz de réaction, des gaz de séchage ainsi que des gaz d'assainissement des différents appareils et de l'atelier;
- un circuit de recyclage des refus de produit fini séparé granulométriquement vers le tambour granulateur,
   caractérisée en ce que le prémélangeur comprend des moyens de décolmatage comportant en combinaison une manche axiale souple et élastique, notamment fixée à la partie supérieure du prémélangeur par un collier, destinée à recevoir le phosphate dosé préalablement broyé, ainsi qu'au moins un pulvérisateur de la solution d'acide phosphorique injectant celle-ci sous pression au niveau de l'extrémité inférieure libre de la manche, cette manche comportant au moins une fente d'accès de la solution d'acide phosphorique pulvérisée et faisant également valve anti-retour des gaz de réaction sous l'effet de l'injection d'acide phosphorique et de son élasticité.

Selon un mode de réalisation préféré de l'installation conforme à l'invention, la manche faisant moyen de décolmatage et valve anti-retour est réalisée en élastomère non vulcanisé.

Selon un autre mode de réalisation préféré de l'installation conforme à l'invention, le réacteur à cuve agitée comporte une goulotte de débordement appliquée contre une ouverture de débordement de la bouillie s'accumulant dans la cuve d'attaque qui comporte deux ouvertures coniques permettant la séparation des gaz de réaction se dégageant lors de l'écoulement vers le tambour granulateur.

Selon encore un autre mode de réalisation préféré de l'installation conforme à l'invention, le tambour granulateur coopère avec un pulvérisateur de la bouillie provenant de la goulotte de débordement du réacteur, ce pulvérisateur étant constitué par un corps tubulaire se terminant par une extrémité dont le profil permet une répartition en éventail de la bouillie dans le tambour granulateur, tout en maintenant constante la vitesse de pulvérisation par variation de la section d'écoulement, à cet effet l'extrémité précitée présentant un profil composite défini par une découpe en biais, inclinée par rapport à l'axe du corps tubulaire, et par une découpe arquée faisant suite à la découpe précédente et raccordée à celle-ci.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés, dans lesquels :
- la figure 1 est une vue d'ensemble d'une installation classique de production de TSP granulé;
- la figure 2 est une vue en élévation du prémélangeur auto-décolmatant conforme à la présente invention;
- la figure 3 est une vue suivant A de la figure 2, montrant la disposition du pulvérisateur d'acide par rapport à la manche souple, faisant à la fois moyen de décolmatage et valve anti-retour des gaz de réaction;
- la figure 4a est une vue en coupe (suivant la ligne A-A de la figure 4b) d'une cuve d'attaque équipée d'une goulotte de débordement;
- la figure 4b est une coupe suivant la ligne D-D de la figure 4a;
- les figures 5a et 5b illustrent une vue en élévation latérale (a) et une vue en élévation frontale (b) d'un pulvérisateur de bouillie utilisé dans le cadre de la présente invention.

Il doit être bien entendu, toutefois, que ces dessins et les parties descriptives correspondantes sont donnés uniquement à titre d'illustration de l'objet de l'invention, dont ils ne constituent en aucune manière une limitation.

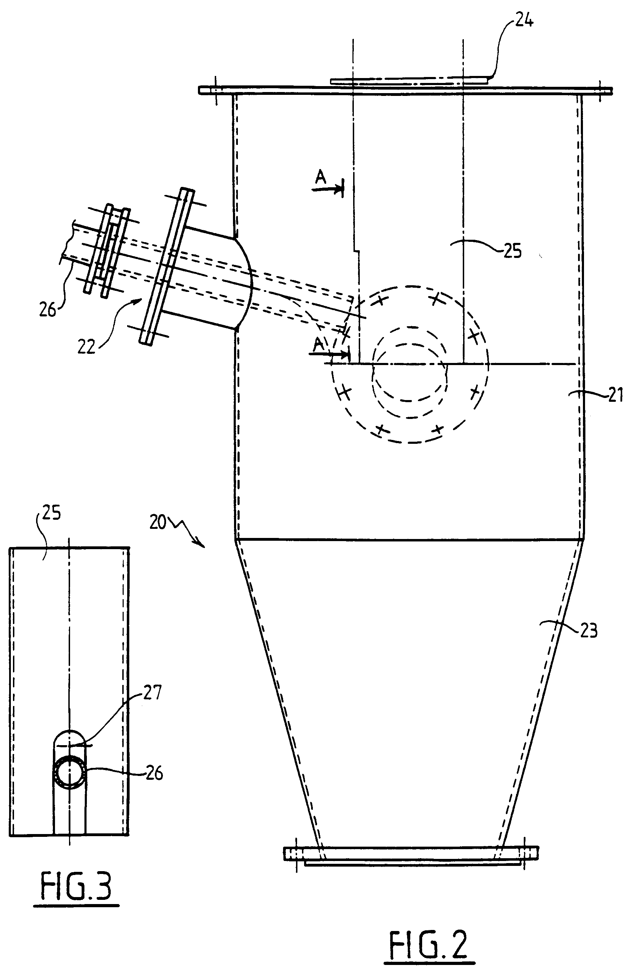

Une installation de production de triple superphosphate (TSP) granulé comprend classiquement une trémie tampon 10 suivie d'un dosimètre à bande 11 pour le dosage du phosphate préalablement broyé, c'est-à-dire destiné à la mesure et au contrôle du débit de phosphate. Le phosphate ainsi dosé est introduit par gravité, à l'aide d'une goulotte (non représentée) quittant le dosimètre à bande, dans un prémélangeur 20 de forme cylindro-conique. La partie cylindrique 21 de ce prémélangeur présente au moins une ouverture 22 (voir la figure 2) pouvant recevoir un pulvérisateur 26 d'acide phosphorique qui injecte l'acide sous une pression comprise entre 0,3 et 0,8 bar. L'inclinaison de l'angle d'injection de cet acide est très importante pour assurer le bon mélange avec le phosphate introduit verticalement : dans le cadre de la présente invention il est de préférence égal à environ 75°. La partie tronconique 23 est, dans un prémélangeur classique, le siège de formation de mottes et d'encrassement importants entraînant le bouchage de ce cône.

Le prémélangeur 20 est installé au-dessus d'un réacteur à cuve agitée 30, auquel il est fixé au moyen de boulons. Dans ce réacteur a lieu la réaction d'attaque des phosphates par l'acide phosphorique.

Ce réacteur à cuve agitée 30 reçoit également, conjointement avec le mélange phosphate/acide phosphorique, de la vapeur, l'apport de vapeur étant nécessaire pour activer la réaction et maintenir la fluidité de la bouillie. Cette cuve d'attaque est suivie par un tambour granulateur 40 qui est destiné à la granulation de la bouillie sortant de la cuve.

Un générateur de gaz chauds 50, dans lequel a lieu la combustion d'un fuel lourd dit fuel "N° 2" (il s'agit d'un fuel ayant la composition suivante : C = 84,5 %; H = 11 %; 0 = 0,38 %; N₂ = 0,18 % et S = 4%, et un pouvoir calorifique de 9 700 Kcal/Kg) produisant les gaz de séchage, dirige ces gaz dans un tube de séchage 60 des grains provenant du tambour granulateur 40. Un élévateur à godets 71 transporte les grains séchés à un niveau supérieur par rapport au tube de séchage 60, de manière à les répartir à l'aide de transporteurs vibrants, tels que 81 et 82, sur des cribles à deux étages 91, 92, 93 et 94 permettant la séparation du produit fini suivant une tranche granulométrique prédéterminée, par exemple de 2 à 4 mm. Chaque crible coopère avec un broyeur, tel que 101, 102, 103 et 104 respectivement, pour effectuer le broyage des refus des cribles avant le recyclage.

De même, chacun des transporteurs vibrants 81 et 82, coopère avec un concasseur, tel que 111 et 112 respectivement, pour effectuer le concassage des refus de ces transporteurs vibrants avant le recyclage vers le tambour granulateur 40 dans lequel les refus broyés et concassés sont transportés à l'aide d'une bande 12 et d'un élévateur à godets 72.

Différents dispositifs de lavage de gaz sont prévus dans l'installation en question. Notamment, une tour de lavage 121 est destinée au lavage à l'eau de mer des gaz du réacteur et du tambour granulateur, alors qu'un dispositif de lavage du type VENTURI, 124, est destiné au lavage à l'eau brute des gaz de séchage, qui sont lavés une deuxième fois à l'eau de mer dans une tour de lavage 122. Une troisième tour de lavage 123 est destinée au lavage à l'eau brute des gaz d'assainissement des appareils. Les différents gaz provenant de l'atelier, du dispositif de séchage, ainsi que les gaz utilisés pour l'assainissement des appareils, sont aspirés à l'aide de ventilateurs, tels que 131, 132 et 133.

Bien entendu, les grains correspondant à la granulométrie souhaitée sont transportés, à l'aide d' une bande 13, vers le site de stockage.

Ci-après sont décrites plus en détail les opérations i) à vi) évoquées plus haut en rapport avec le procédé de fabrication de TSP granulé.

### i. - Préparation de la bouillie

Cette étape comporte les opérations suivantes:
- mélange préalable à la réaction proprement dite dans le réacteur de la solution d'acide phosphorique et du phosphate, après que ce dernier ait été broyé, tamisé, stocké et dosé;
- réaction d'attaque de la solution acide sur le phosphate ainsi préparé, et
- maintien du milieu réactionnel à la température de réaction, notamment comprise entre 90 et 110°C.

De façon plus précise, le phosphate broyé entre 80 et 95 % de passe au tamis de 160µm est stocké dans une trémie tampon de volume utile égal à 4m³ environ. Cette trémie alimente directement le dosimètre 11 par l'intermédiaire d'un sas alvéolaire. A la sortie du dosimètre le phosphate s'écoule par gravité dans le prémélangeur auto-décolmatant 20 conforme à l'invention, qui reçoit latéralement également l'acide phosphorique, dont la concentration varie entre 38 et 45 % en P₂0₅, préalablement dosé, nécessaire à l'attaque du phosphate (dans les composés phosphatés la teneur du phosphore est exprimée sous forme de P₂O₅, pentoxyde de phosphore, cette unité de mesure de concentration étant d'usage courant chez les fabricants et les utilisateurs d'engrais). Le débit d'acide phosphorique est asservi au débit du phosphate et l'introduction de l'acide est faite de manière à assurer un bon contact avec le phosphate. Le mélange ainsi obtenu s'écoule directement dans le réacteur à cuve agitée 30 disposé au-dessous du prémélangeur 20.

Dans ce réacteur à cuve agitée, c'est-à-dire dans la cuve d'attaque, se poursuit la réaction phosphate/acide phosphorique. La température du milieu réactionnel est maintenue entre 90 et 110° C, comme déjà précisé plus haut, par injection directe de vapeur en plusieurs points du réacteur. Après un séjour entre 5 à 20 minutes, la bouillie s'écoule par gravité dans le tambour granulateur 40.

Or, le circuit de bouillie est conçu de manière à éviter tout bouchage résultant d'une prise en masse ou formation de poches de gaz.

Tous les matériaux en contact avec la bouillie sont résistants aux conditions de service.

En ce qui concerne les gaz émanant de la réaction, ceux-ci sont aspirés et lavés, comme déjà précisé ci-dessus.

### ii. - Granulation

Cette étape est effectuée dans le tambour granulateur rotatif évoqué plus haut qui reçoit, d'une part, la bouillie en provenance du réacteur et, d'autre part, les produits recyclés de l'étape vi).

Du fait que la bouillie s'écoule par débordement de la cuve d'attaque vers le tambour granulateur, cette cuve est installée au-dessus du granulateur, à une hauteur suffisante, c'est-à-dire que l'emplacement relatif du réacteur et du tambour granulateur est choisi de manière à permettre une bonne pulvérisation de la bouillie.

Le tambour granulateur est conçu de manière à permettre une surveillance et un contrôle faciles de l'évolution du milieu en granulation. Ce granulateur est construit en matériau résistant aux conditions de service et équipé lui aussi de moyens de décolmatage nécessaires, de type classique.

Les gaz émanant du granulateur sont aspirés, puis mélangés avec les gaz de réaction avant le lavage.

Le produit ainsi granulé tombe, par gravité, directement dans le tube sécheur 60.

En ce qui concerne le rendement de la granulation et la qualité du produit fini, ceux-ci sont nettement meilleurs par rapport à l'Art antérieur.

### iii. - Séchage

Cette étape s'effectue à co-courant à l'aide de gaz chauds obtenus par combustion de fuel lourd "N°2" dans le générateur de gaz chauds indépendant 50 débitant, par l'intermédiaire d'une boîte de liaison, directement dans le tube sécheur précité, qui présente une conception classique.

### iv. - Séparation granulométrique

Le produit granulé sortant du tube sécheur est repris directement par l'élévateur à godets 71 qui alimente, par l'intermédiaire d'une simple goulotte en Y, les deux transporteurs vibrants 81 et 82. Chaque transporteur est équipé d'une grille permettant de séparer la tranche granulométrique supérieure à la valeur choisie et est composé de deux éléments travaillant en série et alimentant chacun un crible à deux étages (Cf. les références 91 à 94 précitées).

Après criblage, la tranche granulométrique comprise entre 2 et 4 mm constitue le produit granulé fini qui est directement envoyé vers une zone de stockage.

Une boîte à volet, placée sur le circuit du produit granulé fini, permet d'en recycler une partie.

Les passants (filtrats) des cribles sont envoyés directement avec le recyclage et les refus sont broyés, puis introduits dans le circuit de recyclage. Les produits constituant le recyclage sont retournés au tambour granulateur 40 par l'intermédiaire de la bande de recyclage 12 et d'un autre élévateur à godets 72.

En outre, une bascule intégrée et installée dans la bande de recyclage permet le contrôle du tonnage qui retourne au granulateur.

Le taux de recyclage, a savoir le rapport entre le tonnage recyclé dans le granulateur et le tonnage produit, est voisin de trois.

Cela étant, il est donc clair que l'étape de séparation granulométrique comporte en outre les opérations suivantes :
- stockage de la tranche granulométrique ainsi séparée;
- recyclage des passants des cribles et d'une partie du produit fini;
- pesage des produits de recyclage.

### v. - Assainissement et lavage des gaz

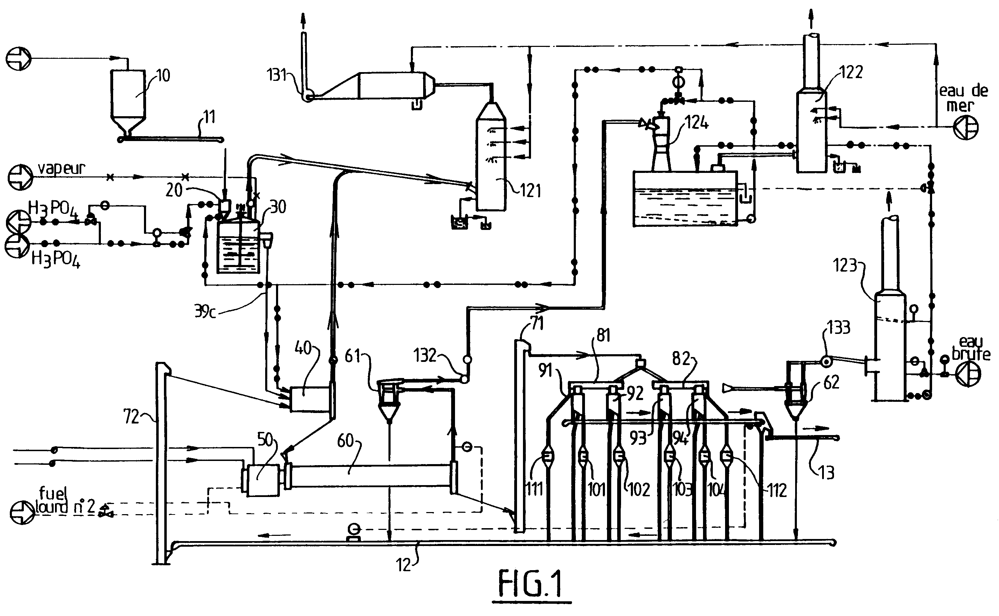

L'installation est également équipée de circuits d'assainissement, tels que :
a) un circuit d'assainissement du réacteur et du tambour granulateur : à cet effet, deux ventilateurs (non visibles à la figure 1) assurent le tirage sur ces deux appareils qui sont maintenus en dépression, évitant ainsi l'émission de gaz dans l'atmosphère de l'atelier. Ces gaz humides contiennent surtout de la vapeur d'eau, du CO₂ et des fluorures, dégagés lors de l'attaque, et sont mélangés et lavés à l'eau de mer;
b) un circuit d'assainissement du tube sécheur : les gaz du sécheur sont d'abord dépoussiérés dans une batterie de cyclones 61, puis lavés à l'eau brute dans le VENTURI 124 pour récupérer les poussières s'échappant des cyclones 61; ensuite, ils sont lavés à l'eau de mer dans une tour finale 122, avant le rejet dans l'atmosphère;
c) un circuit d'assainissement de l'atelier: pour éviter les dégagements dans l'atelier des gaz pollués, les opérations génératrices de poussières, notamment le broyage du phosphate, la granulation, la séparation granulométrique et le recyclage sur bande, sont effectuées en condition de dépression, ce qui implique l'aspiration des poussières par un ventilateur aspirant au niveau des différents points.

En résumant les opérations d'assainissement évoqués sous a) à c), il y a donc lieu de préciser qu'elles comportent :
- la mise ou le maintien en dépression du réacteur et du granulateur, c'est-à-dire l'accomplissement des réactions d'attaque et de granulation en condition de dépression, et
- le dépoussiérage (par une batterie de cyclones) des gaz de séchage, ainsi que
- le dépoussiérage et le lavage à l'eau brute des gaz aspirés avec les poussières, avant rejet dans l'atmosphère;
- le recyclage de la solution de lavage de ces gaz au niveau du lavage des gaz de séchage, et
- la réutilisation de cette solution de lavage recyclée et concentrée au niveau des opérations de réaction ou granulation.

La disposition des appareils et la conception des circuits d'assainissement en question font que l'installation dans son ensemble est parfaitement assainie.

Les gaz d'assainissement de l'atelier, contenant particulièrement des poussières, passent à travers une autre batterie de cyclones indépendante 62, puis sont lavés à l'eau brute dans une tour cyclonique 123, avant le rejet dans l'atmosphère.

La solution de lavage des gaz d'assainissement de l'atelier est recyclée elle aussi au niveau du premier étage de lavage des gaz du sécheur. Après concentration de la solution de lavage à ce niveau, celle-ci est réintroduite au niveau du réacteur ou du granulateur (pour éviter de recycler beaucoup d'eau dans le processus, il est nécessaire de maintenir la même solution de lavage en circulation jusqu'à ce qu'elle soit chargée avant de la recycler).

Après avoir décrit l'installation et le procédé de fabrication du TSP granulé, il y a lieu de décrire plus en détail le prémélangeur 20 qui, conformément à l'invention, est conçu de manière à éviter tout bouchage ou colmatage de sa partie tronconique 23 ainsi que toute remontée de gaz risquant de se condenser au niveau du dosimètre 11.

A cet effet, la partie cylindrique 21 du prémélangeur contient en combinaison une manche souple en caoutchouc non vulcanisé, naturel ou synthétique, 25 (Cf. également la figure 3), qui est fixée à sa partie supérieure par l'intermédiaire d'un collier 24, ainsi qu'au moins un pulvérisateur d'acide 26. Cette manche est dotée d'au moins une fenêtre ou fente 27 destinée à recevoir le jet d'acide phosphorique pulvérisé et sous pression, le nombre de fentes étant lié au nombre de pulvérisateurs d'acide effectivement utilisés. Sous l'effet de la pression de cet acide, l'extrémité libre de la manche souple 25 se met en mouvement, ce mouvement étant d'autant plus important que la pression d'injection d'acide pulvérisé est élevée, ce qui assure un bon mélange avec le phosphate broyé qui traverse la manche et un renouvellement continu du point de décharge. Grâce à l'utilisation de cette manche, la partie tronconique du prémélangeur est nettoyée en continu, en sorte qu' il n'y a plus de zones mortes : l'avantage de cette disposition peut être apprécié en tenant compte du fait que c'est justement à partir de la présence de zones mortes que s'amorce la formation des mottes précitées. Cette manche joue également le rôle d'une valve anti-retour sous l'effet de l'injection d'acide phosphorique et de son élasticité, en sorte qu'elle empêche la remontée des gaz. Pendant le fonctionnement, la partie supérieure de la manche est pleine de phosphates et a une forme cylindrique, alors qu' au fur et à mesure que cette manche plonge dans le prémélangeur, celle-ci prend une forme plus ou moins elliptique et son mouvement s'accélère sous l'effet de l'injection d'acide et l'élasticité du caoutchouc, la partie inférieure de la manche -qui est affaiblie par la présence des fentes-ayant ainsi tendance à se refermer pendant le fonctionnement, ce qui lui permet de jouer justement le rôle de valve anti-retour.

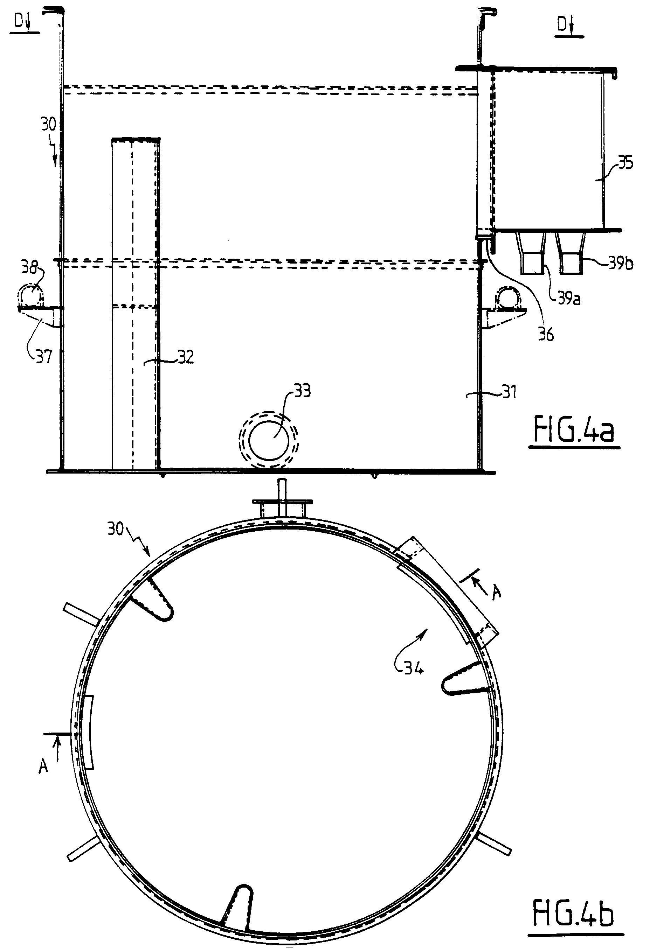

En ce qui concerne le réacteur à cuve agitée 30 (Cf. les figures 4a et 4b), celui-ci comprend une cuve d'attaque proprement dite 31, une chicane anti-vortex 32, un trou de vidange 33, une ouverture de débordement de la bouillie 34, une goulotte de débordement de la bouillie 35, une bride 36 de fixation de la goulotte de débordement à la cuve, un support 37 d'une couronne 38 d'amenée de vapeur à l'intérieur de la cuve.

Le réacteur à cuve agitée permet de répondre aux objectifs suivants :
- assurer un bon rendement d'attaque;
- réduire les pertes;
- améliorer la granulation;
- améliorer la fiabilité de l'équipement;
- faciliter la maintenance;
- réduire les coûts d'investissement et de maintenance.

Il y a lieu de noter également que la position du prémélangeur sur le réacteur conditionne le temps de séjour de la bouillie dans celui-ci et les pertes par envolement.

La goulotte de débordement de la bouillie 35, installée en face de l'ouverture de débordement 34 de la cuve d'attaque 31, reçoit la bouillie, qui passe ensuite à travers deux ouvertures coniques 39a et 39b pour s'écouler le long d'un conduit 39c (Cf. la figure 1) -ce conduit étant, en pratique, en forme de demi-cercle-jusqu'au niveau du granulateur 40. La partie supérieure de la goulotte de débordement 35 est munie d'une partie amovible : les deux ouvertures coniques 39a et 39b sont donc faciles à isoler et à nettoyer en cas de besoin, leur forme permettant une séparation des gaz se dégageant lors de l'écoulement vers le granulateur.

Dans les installations classiques de fabrication du TSP granulé, cette partie du circuit a toujours été le principal goulot d'étranglement. Le caractère encrassant de la bouillie et le dégagement continu des gaz de vapeur entraînent le bouchage rapide de ce circuit ou le désamorçage d'une pompe, lorsqu'un système de pompage est utilisé.

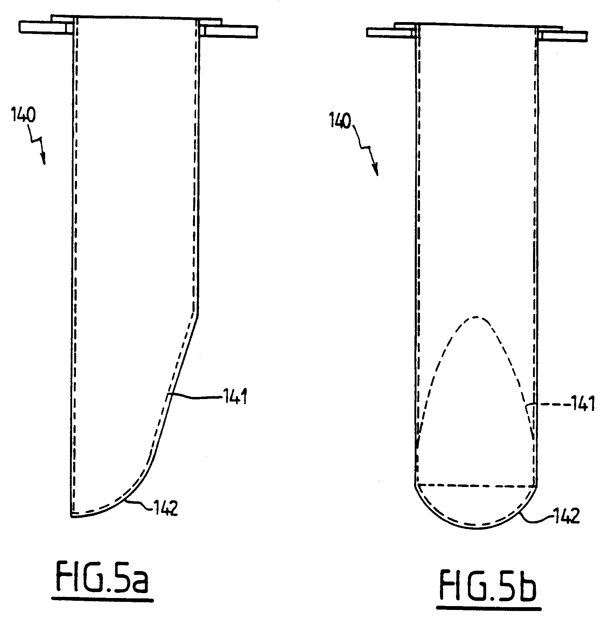

Cette goulotte de débordement conforme à l'invention permet de séparer continuellement la phase gazeuse, et d'améliorer donc énormément le fonctionnement de ce circuit et, par voie de conséquence, la granulation successive à l'intérieur du tambour granulateur 40. Ce tambour coopère avec un pulvérisateur de bouillie 140 (Cf. la figure 5) qui permet la répartition de la bouillie sur le lit du granulateur : grâce à la conception de ce pulvérisateur, le jet de bouillie prend la forme d'un éventail qui couvre une grande surface de ce lit. De plus, la rotation du tambour granulateur permet de renouveler continuellement ce lit. Une telle répartition de la bouillie dans le granulateur permet une meilleure liaison des grains entre eux, sans conduire à la formation de grosses mottes. La vitesse de pulvérisation est maintenue constante par la variation de la section.

Les avantages de ce pulvérisateur consistent donc à permettre l'amélioration de la granulation, la réduction du taux de recyclage, étant donné qu'il n'est plus nécessaire de recycler une grande quantité de produits pour éponger l'humidité de la bouillie, ainsi que la réduction de l'encrassement du tambour granulateur.

Le pulvérisateur de bouillie 140 présente l'extrémité de sortie de la bouillie provenant de la goulotte de débordement du réacteur avec un profil composite qui est défini par une découpe en biais 141, inclinée sensiblement de 20° par rapport à l'axe du pulvérisateur, et par une découpe arquée 142 faisant suite vers le bas à la découpe précédente et raccordée à celle-ci.

## Revendications

1. Procédé de production de triple superphosphate (TSP) granulé, comportant les étapes suivantes :
i) préparation d'une bouillie de phosphate préalablement broyé et de solution d'acide phosphorique (10,20,30);
ii) granulation de la bouillie (40);
iii) séchage du produit granulé (60);
iv) séparation granulométrique du produit granulé (81,82);
v) assainissement et lavage des gaz (121 à 124), et
vi) recyclage (12,72) des refus de produit fini séparé granulométriquement,
caractérisé en ce que l'étape i) comporte une opération de décolmatage (25) d'un prémélangeur (20) du phosphate et de l' acide, situé en amont d'un réacteur à cuve d'attaque (30) de la solution acide sur le phosphate, laquelle opération de décolmatage est réalisée par introduction guidée, suivant un chemin axial déformable (25), de phosphate dosé, préalablement broyé, à l'intérieur du prémélangeur et par pulvérisation (26) de la solution d'acide phosphorique sur le phosphate à la fin du chemin axial d'introduction guidée.

2. Procédé selon la revendication 1, caractérisé en ce que l'angle que la direction de pulvérisation fait avec le chemin axial d'introduction guidée de phosphate est supérieur à 60° et peut atteindre environ 75°.

3. Installation de production de triple superphosphate (TSP) granulé, comportant les dispositifs suivants :
- un dosimètre (11) de phosphate préalablement broyé;
- un prémélangeur (20) du phosphate broyé ainsi dosé avec une solution d'acide phosphorique, le prémélangeur comprenant une partie supérieure cylindrique (21) raccordée à une partie inférieure tronconique (23);
- un réacteur à cuve agitée (30) recevant le phosphate et la solution d'acide phosphorique ainsi prémélangés et destiné à permettre l'attaque du phosphate par l'acide phosphorique;
- un tambour granulateur (40) de la bouillie sortant du réacteur;
- un dispositif de séchage (60) du produit ainsi granulé;
- une pluralité de séparateurs granulométriques (81,82) de ce produit granulé;
- des dispositifs de lavage (121,122,123,124) des gaz de réaction, des gaz de séchage ainsi que des gaz d'assainissement des différents appareils et de l'atelier;
- un circuit de recyclage (12,72) des refus de produit fini séparé granulométriquement vers le tambour granulateur (40),
caractérisée en ce que le prémélangeur (20) comprend des moyens de décolmatage comportant en combinaison une manche axiale souple et élastique (25), notamment fixée à la partie supérieure (21) du prémélangeur par un collier (24), destinée à recevoir le phosphate dosé préalablement broyé, ainsi qu'au moins un pulvérisateur de la solution d'acide phosphorique injectant celle-ci sous pression au niveau de l'extrémité inférieure libre de la manche, cette manche (25) comportant au moins une fente (27) d'accès de la solution d'acide phosphorique pulvérisée et faisant également valve anti-retour des gaz de réaction sous l'effet de l'injection d'acide phosphorique et de son élasticité.

4. Installation selon la revendication 3, caractérisée en ce que la manche (25) faisant moyen de décolmatage et valve anti-retour est réalisée en élastomère non vulcanisé.

5. Installation selon la revendication 3, caractérisée en ce que le réacteur à cuve agitée (30) comporte une goulotte de débordement (35) appliquée contre une ouverture (34) de débordement de la bouillie s'accumulant dans la cuve d'attaque (31) qui comporte deux ouvertures coniques (39a,39b) permettant la séparation des gaz de réaction se dégageant lors de l'écoulement vers le tambour granulateur (40).

6. Installation selon la revendication 3, caractérisée en ce que le tambour granulateur (40) coopère avec un pulvérisateur (140) de la bouillie provenant de la goulotte de débordement (35) du réacteur (30), ce pulvérisateur étant constitué par un corps tubulaire se terminant par une extrémité dont le profil permet une répartition en éventail de la bouillie dans le tambour granulateur, tout en maintenant constante la vitesse de pulvérisation par variation de la section d'écoulement, à cet effet l'extrémité précitée présentant un profil composite défini par une découpe en biais (141), inclinée par rapport à l'axe du corps tubulaire, et par une découpe arquée (142) faisant suite à la découpe précédente et raccordée à celle-ci.

## Claims

1. Process for producing triple superphosphate (TSP) granulate, comprising the following steps:
i) preparing a slurry of previously ground phosphate and phosphoric acid solution (10, 20, 30);
ii) granulating the slurry (40);
iii) drying the granulated product (60);
iv) granulometrically separating the granulated product (81, 82);
v) cleaning and washing the gases (121 to 124), and
vi) recycling (12, 72) the waste from the end product after it has been separated granulometrically, characterised in that step i) comprises an operation of unblocking (25) a premixer (20) for the phosphate and acid, disposed upstream of a reactor having a tank (30) for the action of the acid solution on the phosphate, said unblocking operation being carried out by the guided introduction, along a deformable axial path (25), of a metered quantity of previously ground phosphate into the premixer and by spraying (26) the phosphoric acid solution onto the phosphate at the end of the guided axial feed path.

2. Process according to claim 1, characterised in that the angle between the direction of spraying and the guided axial feed path for the phosphate is greater than 60° and may be up to about 75°.

3. Installation for the production of triple superphosphate (TSP) granulate, comprising the following apparatus:
- a dosimeter (11) for previously ground phosphate;
- a premixer (20) for mixing the ground phosphate thus metered in with a phosphoric acid solution, the premixer comprising a cylindrical upper part (21) connected to a frustum-shaped lower part (23);
- a reactor with an agitator tank (30) which receives the phosphate and the phosphoric acid solution thus premixed, and which is intended to allow the phosphoric acid to act on the phosphate;
- a granulating drum (40) for the slurry leaving the reactor;
- an apparatus (60) for drying the product thus granulated;
- a plurality of granulometric separators (81, 82) for this granulated product;
- apparatus (121, 122, 123, 124) for washing the reaction gases, the drying gases and the cleaning gases from the different pieces of apparatus and from the workshop;
- a circuit (12, 72) for recycling the waste from the granulometrically separated end product into the granulating drum (40),
characterised in that the premixer (20) contains unblocking means having a combination of a flexible elastic axial sleeve (25) fixed in particular to the upper part (21) of the premixer by a flange (24), adapted to receive the metered quantity of previously ground phosphate, and at least one sprayer for the phosphoric acid solution which injects this solution under pressure at the free lower end of the sleeve, this sleeve (25) comprising at least one access slot (27) for the sprayed phosphoric acid solution, and also forming a non-return valve for the reaction gases under the effect of the injection of phosphoric acid and its elasticity.

4. Installation according to claim 3, characterised in that the sleeve (25) forming the unblocking means and non-return valve is made of unvulcanised elastomer.

5. Installation according to claim 3, characterised in that the reactor with an agitator tank (30) has an overflow spout (35) mounted on an overflow opening (34) for the slurry accumulating in the reaction tank (31) which has two conical openings (39a, 39b) allowing the separation of the reaction gases which are given off as the material flows into the granulating drum (40).

6. Installation according to claim 3, characterised in that the granulating drum (40) co-operates with a sprayer (140) for the slurry coming from the overflow spout (35) of the reactor (30), this sprayer consisting of a tubular body terminating in an end which is shaped so as to allow the slurry to be distributed in a fan shape into the granulating drum, while maintaining a constant spraying speed by varying the cross-section of flow, the abovementioned end having, for this purpose, a composite profile defined by a bias cutout (141), sloping with respect to the axis of the tubular body, and by an arcuate cutout (142) adjoining the previous cutout and connected thereto.

## Patentansprüche

1. Verfahren zur Herstellung von granularem Tripelsuperphosphat (TSP), umfassend die folgenden Schritte:
(i) Zubereitung einer breiigen Mischung aus zuvor zermahlenem Phosphat und einer Phosphorsäurelösung (10, 20, 30);
(ii) Granulieren des Breis (40);
(iii) Trocknen des granulierten Produkts (60);
(iv) Separieren des granulierten Produkts (81, 82) nach Granulatgröße;
(v) Aufbereitung bzw. Trocknung und Reinigung der Gase (121 bis 124), und
(vi) Rückführung (12, 72) der Rückstände des nach Granulatgröße separierten Endprodukts,
dadurch gekennzeichnet, dass der Schritt (i) einen Vorgang der Dekolmation bzw. Entschlickung (25) eines Phosphat- und Säure-Vormischers (20) umfaßt, der stromaufwärts eines Reaktionsbehälters (30) zum Angriff der sauren Lösung auf das Phosphat angeordnet ist, welcher Vorgang der Dekolmation durch geführte Einfuhr von dosiertem, zuvor zermahlenem Phosphat entlang einem axialen deformierbaren Weg (25) in das Innere des Vormischers und durch Einsprühen (26) der sauren Phosphatlösung auf das Phosphat am Ende des axialen Weges zur geführten Einfuhr realisiert wird.

2. Verfahren nach Anspruch 1
dadurch gekennzeichnet, dass der Winkel, den die Einsprührichtung mit dem axialen Weg zur geführten Einfuhr bildet, über 60 ° beträgt und ca. 75° erreichen kann.

3. Anlage zur Herstellung von granularem Tripelsuperphophat (TSP), umfassend die folgenden Vorrichtungen:
- ein Dosimeter (11) von zuvor zermahlenem Phosphat;
- einen Vormischer (20) für das zermahlene wie dosierte Phosphat mit einer sauren Phosphorlösung, welcher Vormischer einen oberen zylindrischen Teil (21) umfaßt, der an einem tieferliegenden kegelstumpfartigen Teil (23) angeschlossen ist;
- einen Reaktions-Rührbehälter (30), der das so vorgemischte Phosphat und die saure Phosphorlösung aufnimmt und bestimmt ist, den Reaktionsangriff des Phosphats durch die Phosphorsäure zu gestatten;
- eine Granuliertrommel (40) für die den Reaktor verlassende breiige Mischung;
- eine Trocknungsvorrichtung (60) für das so granulierte Produkt;
- eine Mehrzahl von Vorrichtungen (81, 82) zum Trennen dieses granulierten Produkts nach Granulatgröße;
- Reinigungsvorrichtungen (121, 122, 123, 124) der Reaktionsgase, Trocknungsgase sowie der Aufbereitungsgase der verschiedenen Vorrichtungen und der Betriebsanlage;
- einen Kreis (12, 72) zum Zurückführen der Rückstände des nach Granulatgröße getrennten Endproduktes zur Granulier-Trommel (40);
dadurch gekennzeichnet, dass der Vormischer (20) Mittel zur Dekolmation bzw. Entschlickung aufweist, die in Kombination einen axial nachgiebigen und elastischen Sack (25) umfaßt, der insbesondere durch einen Flansch (24) am oberen Teil (21) des Vormischers befestigt ist und bestimmt ist, das zuvor zermahlene dosierte Phosphat aufzunehmen, sowie mindestens eine Einsprühvorrichtung für die Phosphorsäurelösung aufweist, die diese unter Druck auf dem Niveau des unteren freien Endes des Sacks einspritzt, welcher Sack (25) mindestens einen Zugangsschlitz (27) für die zerstäubte Phosphorsäurelösung umfaßt und gleichermaßen ein Einwegventil für die Reaktionsgase unter der Wirkung der Einspritzung der Phosphorsäure und seiner Elastizität bildet.

4. Anlage nach Anspruch 3,
dadurch gekennzeichnet, dass der das Mittel zur Dekolmation und das Einwegventil bildende Sack (25) aus einem nicht vulkanisierten Elastomer hergestellt ist.

5. Anlage nach Anspruch 3,
dadurch gekennzeichnet, dass der Reaktions-Rührbehälter (30) einen Überlauf (35) umfaßt, der an einer Überlauf-Öffnung (34) für den sich in dem Reaktionsbehälter (31) ansammelnden Brei angeordnet ist, welcher Überlauf zwei konische Öffnungen (39a, 39b) umfaßt, die das Abscheiden der Reaktionsgase erlauben, die beim Austreten in Richtung der Granuliertrommel (40) frei werden.

6. Anlage nach Anspruch 3,
dadurch gekennzeichnet, dass die Granuliertrommel (40) mit einer Einspritzvorrichtung (140) für den aus dem Überlauf (35) des Reaktors (30) kommenden Brei zusammenarbeitet, welche Einspritzvorrichtung durch einen rohrförmigen Körper gebildet ist, der mit einem äußeren Ende abschließt, dessen Profil eine aufgefächerte Verteilung des Breies in der Granuliertrommel erlaubt, was alles die Einspritzgeschwindigkeit durch Verändern des Abgabeabschnittes konstant macht, wobei das zuvor erwähnte äußere Ende zu diesem Zweck ein zusammengesetztes Profil besitzt, das durch einen abgewinkelten Schnitt (141) definiert ist, der gegen die Achse des rohrförmigen Körpers geneigt ist, und durch einen gewölbten Schnitt (142), der dem vorherigen folgt und sich an diesen anschließt.
